# EUROPÄISCHE PATENTSCHRIFT

(11) **EP 0 958 481 B1**
(45) Veröffentlichungstag und Bekanntmachung des Hinweises auf die Patenterteilung: **13.02.2002**
(21) Anmeldenummer: 97940113.0
(22) Anmeldetag: 22.08.1997
(51) Int. Cl.: F27D 13/00, F27B 3/18, F27B 3/16, C21C 5/52

(54) **EINSCHMELZAGGREGAT MIT EINEM LICHTBOGENOFEN**
SMELTING INSTALLATION WITH AN ELECTRIC-ARC FURNACE
GROUPE DE FUSION COMPORTANT UN FOUR A ARC

(30) Priorität: 23.08.1996 DE 19634348
(43) Veröffentlichungstag der Anmeldung: 24.11.1999
(73) Patentinhaber: ARCMET TECHNOLOGIE GMBH, 4030 Linz (AT)
(72) Erfinder: FUCHS, Gerhard, D-77694 Kehl (DE)
(74) Vertreter: Kramer, Reinhold, Dipl.-Ing.
(86) Internationale Anmeldenummer: EP9704581
(87) Internationale Veröffentlichungsnummer: WO9808041

(56) Entgegenhaltungen:
- EP-A- 0 291 701
- EP-A- 0 385 434
- EP-A- 0 672 881
- WO-A-91/13305
- DE-A- 4 138 118
- DE-A- 4 326 369
- DE-A- 4 332 913
- DE-A- 4 406 260
- DE-A- 4 424 324
- DE-A- 4 445 783
- JP-A- 7 332 863

## Beschreibung

### Technisches Gebiet

Die Erfindung betrifft ein Einschmelzaggregat mit einem Lichtbogenofen gemäß dem Oberbegriff des Patentanspruches 1.

### Stand der Technik

Ein Einschmelzaggregat dieser Art ist durch die WO 90/10086 bekannt geworden. Bei dem bekannten Einschmelzaggregat ist ein äußeres Segment des Gefäßdeckels durch einen, in einer Haltekonstruktion befestigten Schacht ersetzt, der in seinem oberen Bereich eine verschließbare Beschickungsöffnung für das Einsatzmaterial und eine Gasdurchtrittsöffnung aufweist. Die heißen Ofengase werden durch den Schacht abgeleitet und erhitzen im Wärmeaustausch Chargiergut, das sich im Schacht befindet. Hierdurch ist eine wesentliche Energieeinsparung möglich.

Um den Einschmelzprozess ohne Nachchargieren durchführen zu können, ist es vorteilhaft, wenn die gesamte Chargiergutmenge für das abzustechende Gewicht an flüssigem Metall in das Gesamtvolumen aus Ofen und Schacht paßt: Deshalb und im Hinblick auf die weitere Forderung, die Schachthöhe zu begrenzen, wird der Querschnitt des Schachtes vorzugsweise rechteckig ausgeführt und das Ofengefäß in der Draufsicht als ein auf einer Seite durch eine Gerade begrenztes Oval ausgebildet. Dies macht die Bereitstellung einer neuen Gefäßform einschließlich der Form des Untergefäßes im Vergleich zu den weit verbreiteten runden Gefäßformen erforderlich.

Bei dem bekannten Einschmelzaggregat ist der gesamte Gefäßdeckel entweder gemeinsam oder auch unabhängig von der den Schacht tragenden Haltekonstruktion relativ zum Gefäß bewegbar. Als vorteilhaft hat sich eine lösbare Befestigung des Gefäßdeckels an der Haltekonstruktion erwiesen, so daß der Gefäßdeckel einschließlich des Schachtes gegenüber dem Ofengefäß verschwenkbar oder linear verschiebbar ist. Bei der zuletzt genannten Variante ist ein gezieltes Chargieren von Einsatzmaterial in verschiedene Bereiche des Ofengefäßes durch den Schacht möglich.

Bei dem bekannten Einschmelzaggregat besteht auch die Möglichkeit, Chargiergut durch im unteren Bereich des Schachtes vorhandene Rückhalteorgane im Schachtraum zurückzuhalten, so daß auch nach Einschmelzen einer Charge während der Feinungsphase die heißen Abgase zur Vorwärmung von Einsatzmaterial ausgenutzt werden können.

Derartige Rückhalteorgane sind in der WO 95/04910 ausführlich beschrieben. Auf diese wird in vorliegender Anmeldung ausdrücklich Bezug genommen.

Durch die DE-A-43 32 913 ist ein Einschmelzaggregat mit einem Lichtbogenofen bekannt geworden, bei dem der ein rundes Ofengefäß abschließende Gefäßdeckel einen ersten und einen zweiten Deckelabschnitt aufweist. In jedem dieser beiden Deckelabschnitte ist eine Beschickungsöffnung zum Chargieren von Einsatzmaterial in das Ofengefäß vorgesehen. Oberhalb der Beschickungsöffnungen befinden sich jeweils schachtförmige Vorratsbehaltsbehälter zum Vorwärmen des in das Ofengefäß zu chargierenden Einsatzmaterials. Diese sind oberhalb des Lichtbogenofens an der Hallenbühne befestigt sind, so daß unabhängig von dem Ofengefäß die hohen Gewichte der mit Einsatzmaterial gefüllten Behälter unmittelbar von der Bühne aufgenommen werden.

Bei einer Ausgestaltungsform der genannten Druckschriften ist der Ofendeckel in Richtung des Elektrodentragarms geteilt, und in unabhängigen Flügeln vom Gefäßoberteil wegschwenkbar. Hierdurch besteht die Möglichkeit, für besondere Ereignisse oder auch zur Inspektion des Ofens das Gefäßoberteil zu öffnen. Ein Mitschwenken der an der Ofenbühne aufgehängten Vorratsbehälter ist nicht vorgesehen. Es ist nur eine einzige Elektrodenöffnung zwischen den auschwenkbaren Deckelhälften vorhanden. Ein seitliches Ausschwenken des die Elektrode tragenden Elektrodentragarmes ist aufgrund der diesen Elektrodenarm einschließenden, an der Ofenbühne aufgehängten Vorratsbehälter nicht möglich. Damit sind auch ein unmittelbares Chargieren von Einsatzmaterial in das Ofengefäß mittels eines Schrottkorbes ausgeschlossen.

Die DE-A-44 45 783 beschreibt ein metallurgisches Aggregat mit einem seitlich am Schmelzgefäß angebrachten Behandlungsgefäß bei dem der Deckel des Schmelzgefäßes in einer Haltekonstruktion befestigt ist, die zugleich einen als Chargiergutvorwärmer ausgebildeten Schacht trägt. Der Deckel des Schmelzgefäßes ist einteilig ausgebildet. Eine Verschiebung der Haltekonstruktion gegenüber dem Ofengefäß ist nicht vorgesehen. Bei einer Ausführungsform weist das Gemäßoberteil im Bereich unterhalb eines rechteckigen Schachtes zur Mitte des Schmelzgefäßes konvergierende Wandsektoren auf.

Die vorliegende Erfindung bezweckt den Einsatz der bewährten Technik bei bereits bestehenden Anlagen. Vorhandene Lichtbogenöfen sollen mit einem Minimum an Aufwand so umgerüstet werden, daß möglichst viele Komponenten der bestehenden Anlage weiterbenutzt werden können und auch das Gebäude, in dem das Einschmelzaggregat untergebracht ist, nicht wesentlich verändert werden muß. Hierbei stellt sich das besondere Problem, daß bei den üblichen Lichtbogenöfen mit rundem oder auch ovalem Ofengefäß, bei denen die Elektroden in der Mitte des Gefäßdeckels angeordnet sind, die Platzverhältnisse für einen, als Chargiergutvorwärmer benutzten Schacht, der neben den Elektroden als ein äußeres Segment des Gefäßdeckels anzuordnen ist, insbesondere bei Berücksichtigung der Gebäudehöhe, so begrenzt sind, daß im Schacht kein ausreichendes Volumen für das zu erhitzende Chargiergut bereitgestellt werden kann. Das Ofengefäß kann aus einem Teil bestehen oder oberhalb der Schlackenlinie in ein Untergefäß (Gefäßunterteil) und ein Obergefäß (Gefäßoberteil) geteilt sein. Der Ofendeckel ist meist gewölbt und hat in konzentrischer Anordnung 3 Durchführungen (Drehstromofen) oder zentrisch 1 Durchführung (Gleichstromofen) für die Elektrode(n), die als Elektrodenöffnung(en) bezeichnet sind.

### Darstellung der Erfindung

Aufgabe der Erfindung ist es, ein Einschmelzaggregat der im Oberbegriff des Patentanspruches 1 genannten Art so auszubilden, daß von vorhandenen Lichtbogenöfen möglichst viele Komponenten verwendet werden können, d. h. möglichst wenige Teile ersetzt bzw. abgeändert werden müssen.

Bei einem Lichtbogenofen mit einem runden oder ovalen Gefäßunterteil, bei dem die Elektroden konzentrisch im Bereich der Mitte angeordnet sind, soll bei den durch die Elektrodenanordnung und die Höhe der Halle begrenzten Platzverhältnissen ein Volumen im Schacht für das zu erhitzende Chargiergut bereitgestellt werden, das ausreicht, um den Einschmelzprozess möglichst ohne Nachchargieren durchführen zu können.

Im Schacht vorhandene Rückhalteorgane für das Chargiergut sollen den besonderen Gegebenheiten angepaßt werden.

Ferner soll sichergestellt werden, daß auch bei der erfindungsgemäßen Lösung ein Austritt an Ofengasen im Bereich des Deckels verhindert werden kann.

Die Erfindung ist durch die Merkmale des Anspruches 1 gekennzeichnet. Vorteilhafte Ausgestaltungen der Erfindung sind den übrigen Ansprüchen zu entnehmen.

Um in dem Schacht, der seitlich neben den Elektroden auf dem Gefäßdeckel angeordnet ist, ein ausreichendes Volumen für das vorzuwärmende Chargiergut bereitzustellen, ist ein so großer Schachtquerschnitt gewählt, daß in der Draufsicht die Innenkontur der von den Elektrodenöffnungen aus gesehenen hinteren Schachtwand wenigstens des oberen Schachtabschnittes außerhalb der Innenkontur des oberen Randes des Gefäßunterteils liegt. Vorzugsweise ist das Querschnittsprofil des Schachtes in diesem Abschnitt rechteckig oder einer Trapezlinie folgend ausgebildet. Durch die erfindungsgemäße Ausgestaltung des Sektors des Gefäßoberteils im Bereich unterhalb des Schachtes, nämlich durch Ausbildung des Gefäßberteils mit einem, von dessen oberen zu dessen unteren Rand konvergierenden Wandsektor wird ein Übergang von den außerhalb der Innenkontur des Gefäßunterteils liegenden Schachtwänden zur Innenkontur des oberen Randes des Gefäßunterteils, d. h. des Ofenherdes hergestellt, der das Chargiergut aus den äußeren Bereichen des Schachtes unbehindert in das Gefäßunterteil leitet. Der Übergang von einer im Profil rechteckigen Schachtform in ein rundes oder ovales Ofengefäß kann auf verschiedene Weise erfolgen, beispielsweise über Querschnitte Rechteck-Oval-Rund oder Rechteck-Mehreck-Rund. Der konvergierende Wandsektor ist, wie auch die übrigen Sektoren des Gefäßoberteils üblicherweise durch wassergekühlte Wandpanels gebildet, die beim Chargieren von Einsatzmaterial durch den Schacht dieses dem im Querschnitt runden bzw. ovalen Gefäßunterteil (Ofenherd) zuführen.

Der Übergang von der in der Draufsicht außerhalb der Innenkontur des oberen Randes des Gefäßunterteils liegenden Innenkontur der Schachtwände zum oberen Rand des runden bzw. ovalen Gefäßunterteils kann bereits oberhalb des oberen Randes des Gefäßoberteils, das heißt, oberhalb des. Gefäßrandes eingeleitet werden, indem hier die von den Elektrodenöffnungen abgewandten Schachtwände schräg nach innen zur Gefäßmitte (Mittelachse des Gefäßes), beziehungsweise zum oberen Rand des Gefäßoberteils geführt werden. Eine solche Führung kann im unteren Schachtabschnitt entweder durch ein konvergierendes, ovalförmiges Wandstück oder durch ebene Elemente erfolgen, die die den Elektroden abgewandte Schachtwand von einem in einem horizontalen Schnitt linearen Profil in ein Mehreckprofil, vorzugsweise ein einer Trapezlinie folgendes Profil, überführen. Vorzugsweise hat der untere Rand der den Elektroden abgewandten Schachtwände etwa die gleiche Innenkontur wie die Innenkontur des oberen Gefäßrandes. Diese Kontur entspricht dann auch der Kontur des zweiten Deckelabschnittes, auf dem der Schacht angeordnet ist.

Bei dem Einschmelzaggregat nach der Erfindung kann der gesamte Ofenunterbau einschließlich des Gefäßunterteils sowie der Elektrodenhub- und -schwenkvorrichtung bei einem Umbau weiterverwendet werden.

Beginnt der konvergierende Übergang von einem Rechteckquerschnitt zum runden Gefäßquerschnitt bereits in einem oberen Schachtabschnitt, zum Beispiel gleich unterhalb der oberen Schachtöffnung, dann muß, von den Elektroden aus gesehen die vordere Schachtwand parallel zur hinteren Schachtwand verlaufend ausgeführt werden, damit sich der Innenquerschnitt des Schachtes von oben nach unten nicht verringert.

Wird also das lineare Querschnittsprofil der hinteren Schachtwand eines im oberen Schachtabschnitt rechteckigen Schachtes in ein Mehreckprofil, vorzugsweise in ein einer Trapezlinie folgendes Profil übergeführt, so ist dies parallel dazu auch für die vordere Schachtwand erforderlich, das heißt, auch das lineare Profil der vorderen Schachtwand ist in gleicher Weise zur Gefäßmitte konvergierend in das betreffende Mehreckprofil überzuführen. Das Querschnittsprofil im unteren Schachtabschnitt wird dann durch zwei parallele Mehreck- oder Trapezlinien gebildet, die durch die Profile der Seitenwände verbunden sind. Werden im untersten Schachtabschnitt die hintere Schachtwand und die angrenzenden seitlichen Schachtwände durch einen zu dem oberen Rand eines runden oder ovalen Gefäßes konvergierenden Wandsektor gebildet, dann ist es bei einem Umbau sogar möglich, das vorhandene runde oder ovale Gefäßoberteil weiterzuverwenden. Diese Lösung hat besondere Bedeutung bei einem Lichtbogenofen mit Gewölbedeckel und einem Schacht mit Rückhalteorganen.

Gemäß einem weiteren Aspekt der vorliegenden Erfindung sind der erste, die Elektrodenöffnung enthaltende und der zweite, den Schacht enthaltende Deckelabschnitt als voneinander durch einen Deckelspalt getrennte Einheiten ausgebildet, die voneinander unabhängig relativ zum Gefäß horizontal verschiebbar sind. Hier. können bei einem Umbau auch Teile des alten Deckels weiter verwendet werden.

Der durch die Trennung in zwei voneinander unabhängige, relativ zum Gefäß horizontal verschiebbare bzw. schwenkbare Einheiten entstehende Deckelspalt läßt sich - wenn erforderlich - auf einfache Weise abdichten, so daß im Vergleich zu einem aus einer Einheit bestehenden Deckel nicht die Gefahr einer Umweltverschmutzung durch austretendes Ofengas entsteht.

Durch eine besondere Anordnung und Ausgestaltung der Rückhalteorgane wird der Übergangszone von einer Rechteck- in eine runde Kontur Rechnung getragen.

### Kurze Beschreibung der Zeichnungen

Die Erfindung wird durch vier Ausführungsbeispiele anhand von zehn Figuren näher erläutert. Es zeigen jeweils in schematischer Darstellung:
- Fig. 1: ein erfindungsgemäßes Einschmelzaggregat in einer Seitenansicht bei geschlossenem Gefäßdeckel,
- Fig. 2: dieses Aggregat bei entferntem zweiten, den Schacht enthaltenden Deckelabschnitt,
- Fig. 3: eine Draufsicht des Einschmelzaggregates mit dem in Fig. 2 eingezeichneten Schnitt III - III des Schachtes bei ausgeschwenktem ersten Deckelabschnitt mit einer ovalförmig ausgebildeten Übergangsform von einem Rechteckquerschnitt des Schachtes in ein rundes Gefäßunterteil,
- Fig. 4: den Schnitt IV - IV von Fig. 3 bei geschlossenem Gefäßdeckel, d. h. mit eingeschwenktem ersten Deckelabschnitt inklusive der Elektroden und eingefahrenem zweiten Deckelabschnitt,
- Fig. 5: einen vergrößerten Ausschnitt von Fig. 4,
- Fig. 6: eine der Fig. 3 entsprechende Ansicht eines zweiten Ausführungsbeispiels, bei dem der Übergang vom Rechteckquerschnitt des Schachtes in ein rundes Ofengefäß im unteren Schachtabschnitt unterhalb der Rückhalteorgane beginnt und mehreckig ausgebildet ist,
- Fig. 7: eine der Fig. 6 entsprechende Ansicht eines dritten Ausführungsbeispiels, bei der der Übergang vom Rechteckquerschnitt des Schachtes in ein rundes Ofengefäß, bereits in einem oberen Schachtabschnitt oberhalb der Rückhalteorgane beginnt,
- Fig. 8: eine der Fig. 4 entsprechende Darstellung dieser Ausführungsform,
- Fig. 9: den wesentlichen Teil des Schnitts IX-IX von Fig. 8, und
- Fig. 10: eine der Fig. 8 entsprechende Ansicht einer Modifikation des dritten Ausführungsbeispiels, mit einem runden Gefäßoberteil, das keinen konvergierenden Wandsektor aufweist.

### Wege zur Ausführung der Erfindung

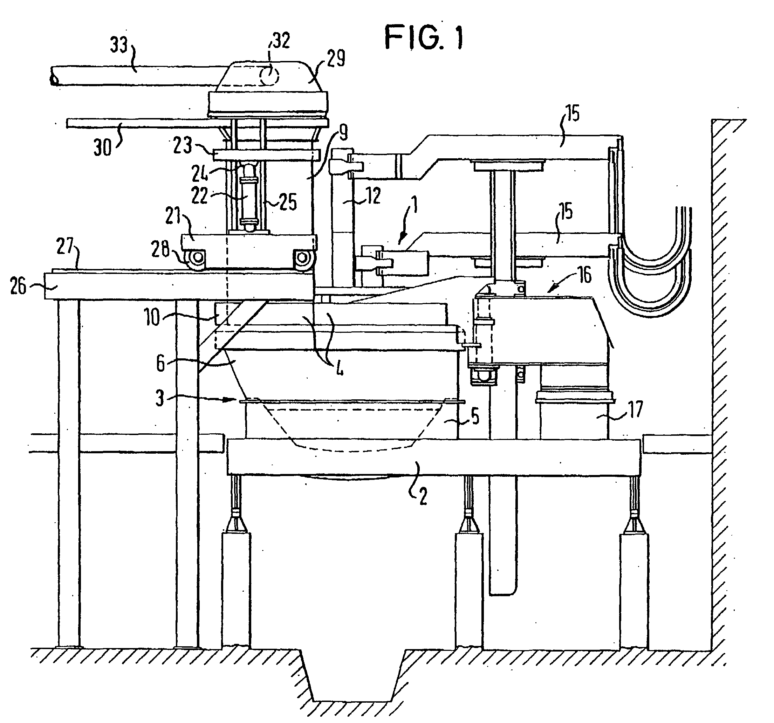

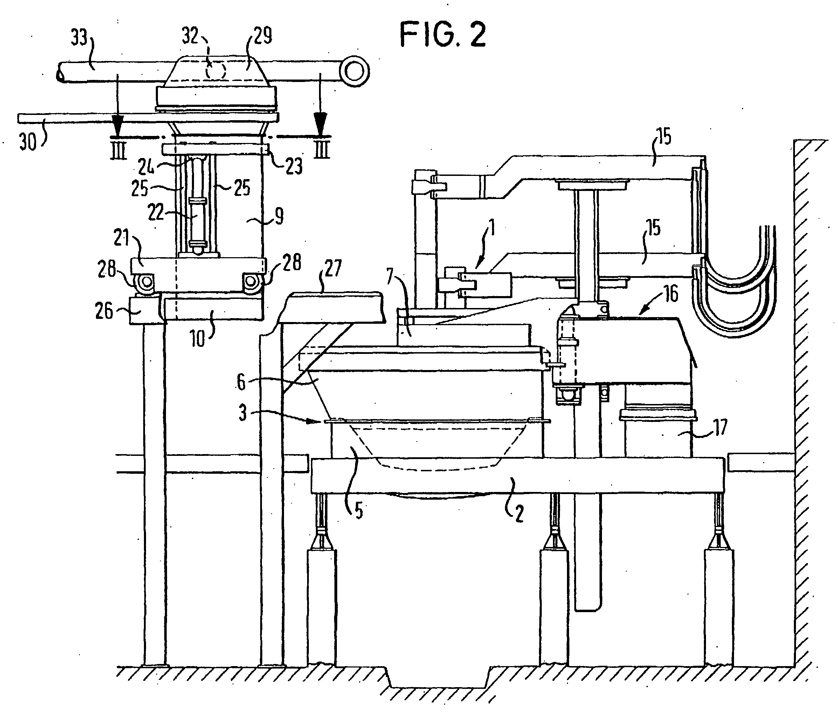

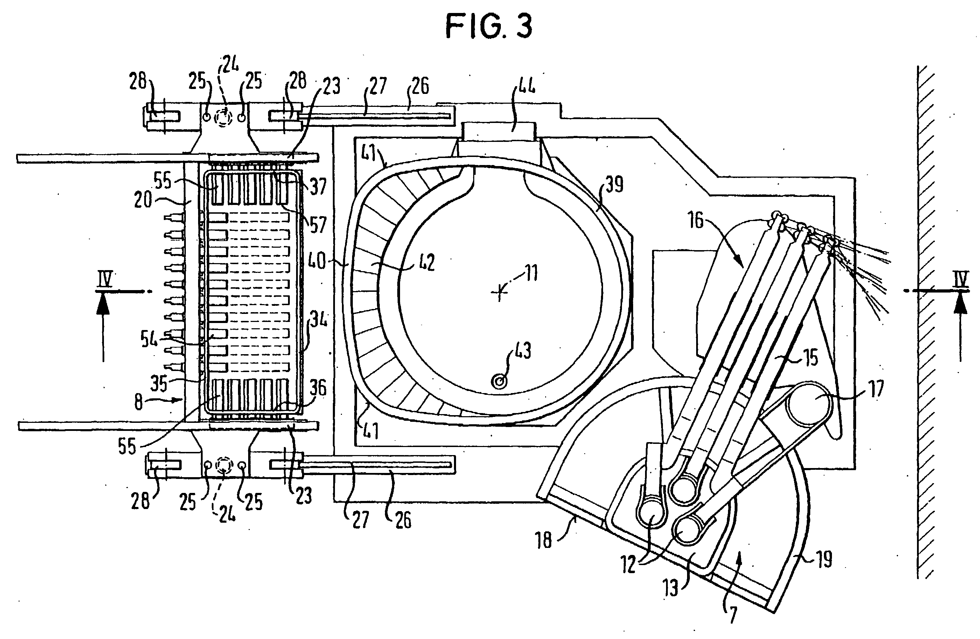

Das in den Fig. 1 bis 5 als erstes Ausführungsbeispiel dargestellte Einschmelzaggregat enthält einen Lichtbogenofen 1 mit einem auf einer Ofenwiege 2 gelagerten Ofengefäß 3 und einem den oberen Rand des Ofengefäßes abdeckenden Gefäßdeckel 4, der gewölbeartig ausgebildet ist. Das Ofengefäß 3 besteht aus einem, den gemauerten Ofenherd bildenden Gefäßunterteil 5 zur Aufnahme der Schmelze und aus einem Gefäßoberteil 6, das üblicherweise aus wassergekühlten Elementen gebildet ist. Wie insbesondere die Fig. 3 bis 5 erkennen lassen, besteht der Gefäßdeckel 4 aus einem ersten Deckelabschnitt 7, der in Fig. 3 in der ausgeschwenkten Position dargestellt ist, und aus einem zweiten Deckelabschnitt 8, der im wesentlichen durch den unteren Endabschnitt eines Schachtes 9 bzw. einen den unteren Abschnitt des Schachtes 9 aufnehmenden Rahmen 10 (Fig. 1 und 2) gebildet ist. In Fig. 1 ist der zweiteilige Gefäßdeckel geschlossen, in Fig. 2 ist der den Schacht 9 enthaltende zweite Deckelabschnitt ausgefahren.

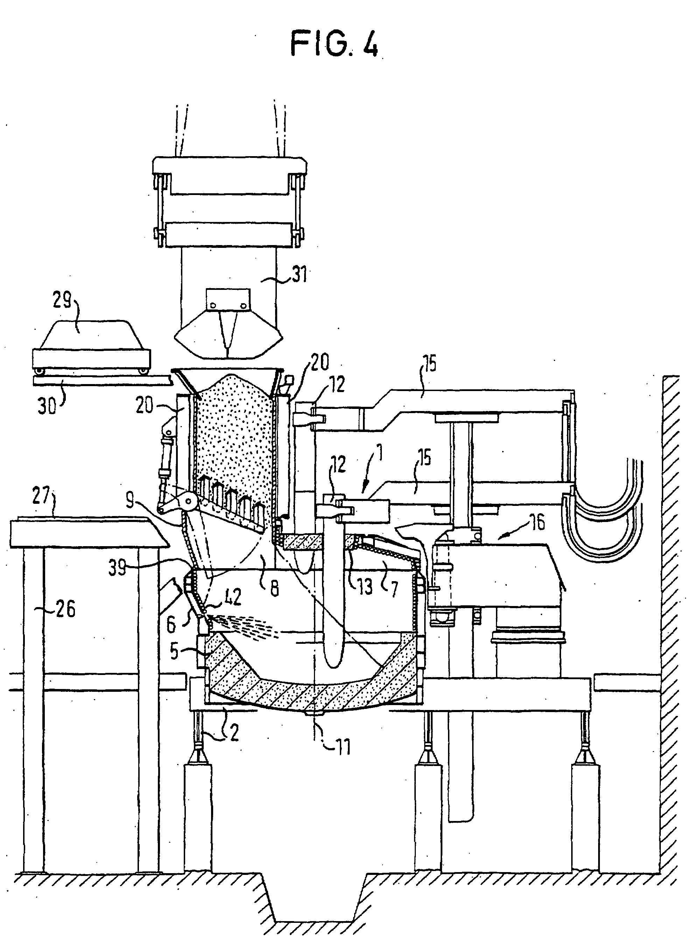

Wie es insbesondere die Fig. 3 bis 5 veranschaulichen, entspricht der in den Zeichnungen rechts von der Mitte des Ofengefäßes dargestellte Teil einem üblichen Lichtbogenofen mit rundem Gefäß und konzentrisch zur Gefäßmitte 11 (Mittelachse des Gefäßes, siehe Fig. 3 und 4) in das Ofengefäß einfahrbaren Elektroden 12. Lediglich der in den Zeichnungen links der Elektroden 12 dargestellte Bereich ist oberhalb des Gefäßunterteils gegenüber der üblichen Ausbildung eines Lichtbogenofens mit runder Gefäßform abgewandelt.

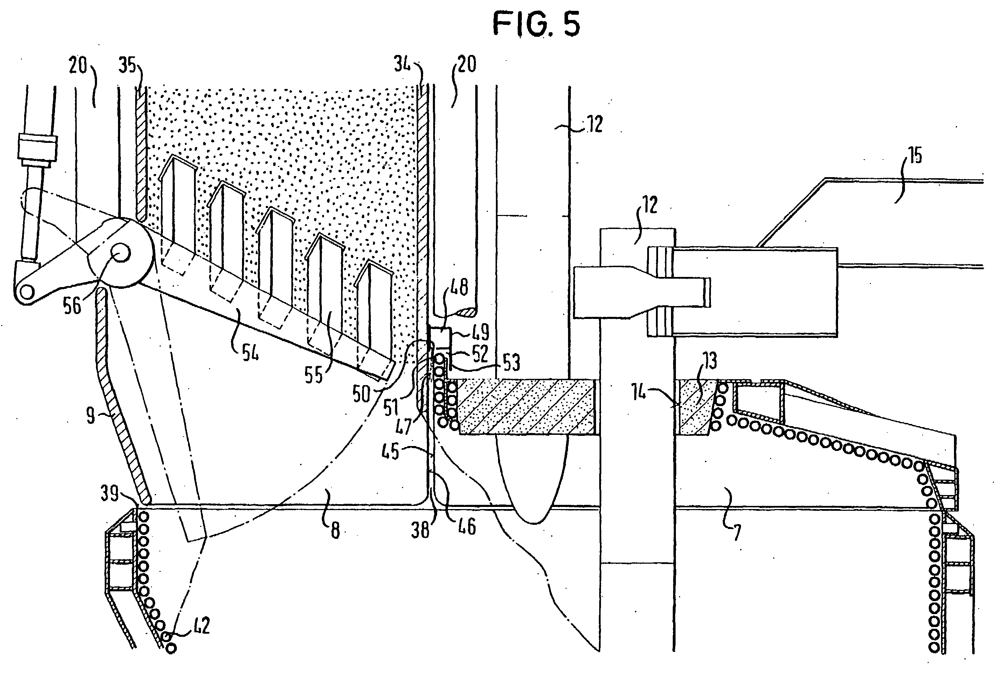

Der erste Deckelabschnitt 7 ist gewölbeartig ausgebildet und weist ein sogenanntes Deckelherz 13 mit Elektrodenöffnungen 14 (Fig. 5) für drei in das Gefäß einzuführende Elektroden 12 in üblicher Dreieckanordnung eines Drehstromlichtbogenofens auf. Die Elektroden 12 sind an Elektrodentragarmen 15 eingespannt und mittels einer Elektrodenhubund -schwenkvorrichtung 16 anhebbar/absenkbar und zur Seite schwenkbar. Der erste Deckelabschnitt 7 ist mittels einer Deckelhub- und -schwenkvorrichtung 17 aus der in den Fig. 4 und 5 dargestellten, auf dem Gefäßrand liegenden Position anhebbar und in die in Fig. 3 dargestellte Position zur Seite schwenkbar, um das Ofengefäß beispielsweise für eine Korbbeschickung von oben freizugeben. Eine geeignete Deckelhub- und -schwenkvorrichtung ist beispielsweise in der EP-0 203 339 beschrieben.

Bei dem Ausführungsbeispiel ist nicht nur das Ofengefäß 3, sondern es sind auch die Deckelhub- und -schwenkvorrichtung 17 sowie die Elektrodenhub- und -schwenkvorrichtung 16 auf die Ofenwiege 2 aufgesetzt, so daß das Ofengefäß gemeinsam mit den Elektroden gekippt werden kann.

Damit bei einem Umbau die Elektrodenanordnung nicht verändert werden muß, ist bei der Lösung gemäß dem ersten Ausführungsbeispiel der erste Deckelabschnitt als durch eine Sehne 18 begrenztes Oval 19 ausgebildet, das die übliche Elektrodenkonfiguration einschließt. Die Sehne 18 muß bei auf dem Ofengefäß aufgesetztem ersten Deckelabschnitt in der Kipprichtung d. h. bei der Darstellung nach Fig. 2 senkrecht zur Papierebene liegen. Damit kann das Ofengefäß mit geschlossenem Deckelabschnitt 7 und ohne Verfahren des Deckelabschnittes 8 zum Abstechen oder Abschlacken gekippt werden. Dabei ist der Schacht 9 nur leicht anzuheben. Auf diese Art werden die Wärmeverluste durch Abstrahlung verringert, bzw. gelangen die heißen Ofengase zum größten Teil in den Vorwärmschacht. Gegebenenfalls kann der beim Anheben des Schachtes 9 zwischen dem unteren Rand des Schachtes bzw. des zweiten Deckelabschnittes 8 und dem Gefäßrand (39 in Fig. 5) entstehende Spalt mittels einer Schürze oder anderer Mittel abgedichtet werden, die am Schacht oder am Gefäßrand angebracht sind.

Der Schacht 9 ist in einer Rahmenkonstruktion 20 befestigt, die den Schacht 9 nach Art eines Käfigs umschließen kann, wobei der in den Figuren 1 und 2 dargestellte Rahmen 10 des zweiten Deckelabschnittes 8 einen Teil der Rahmenkonstruktion darstellt. Die in den Figuren nur schematisch dargestellte den Schacht 9 tragende Rahmenkonstruktion 20 ist in einer Haltevorrichtung 21 derart gelagert, daß die Rahmenkonstruktion 20 gemeinsam mit dem Schacht mittels einer Hubvorrichtung 22 anhebbar und absenkbar ist. Zu diesem Zweck sind an Querbalken 23 der Rahmenkonstruktion Angriffsstellen 24 für die sich an der Haltevorrichtung 21 abstützenden Hubvorrichtungen 22 vorgesehen, so daß der Querbalken 23 und damit die den Schacht tragende Rahmenkonstruktion 20, aus der in Fig. 1 dargestellten unteren Position in die in Fig. 2 dargestellte obere Position anhebbar ist. Durch Führungsstangen 25 wird hierbei die erforderliche Führung gewährleistet.

Die Haltevorrichtung 21 mit Schacht 9 ist horizontal verschiebbar. Zu diesem Zweck sind auf einem Gerüst 26 Schienen 27 vorgesehen, und die Haltevorrichtung 21 ist mit Rädern 28 ausgestattet, die ein Verfahren der Haltevorrichtung 21 in horizontaler Richtung ermöglichen.

Der Schacht 9 ist oben mittels eines Schachtdeckels 29 verschlossen, der bei dem dargestellten Beispiel auf Schienen 30 horizontal verfahrbar ist, um die obere Schachtöffnung zum Chargieren mittels eines Krans 31 (Fig. 4) freizugeben. Der haubenförmig ausgebildete Schachtdeckel 29 weist auf der in Fig. 1 hinteren Seite eine Gasdurchtrittsöffnung 32 auf, die mit einer Abgasleitung 33 verbunden ist, wenn sich der Schacht 9 und damit der Rahmen 10 in der in Fig. 1 dargestellten Position befindet.

Fig. 3 zeigt, daß der Schacht 9 im Querschnitt rechteckig ausgebildet ist. Vorzugsweise ist der Schacht im unteren Bereich rechteckig ausgebildet, wenn Rückhalteorgane für das Einsatzmaterial vorgesehen werden, wie sie weiter unten im einzelnen beschrieben werden. Der Schacht 9 weist somit wenigstens in seinem unteren Bereich rechteckförmig angeordnete Schachtwände auf mit einer bei geschlossenem Gefäßdeckel (Fig. 1, 4 und 5) zur Sehne 18 des ersten Deckelabschnittes 7 benachbarten vorderen Schachtwand 34, einer der Sehne 18 abgewandten hinteren Schachtwand 35 und zwei, diese Wände verbindenden seitlichen Schachtwänden 36 und 37. Die vordere Schachtwand 34 hat hierbei etwa die gleiche Länge wie die Sehne 18, d. h. die Schachtwand 34 grenzt mit einem schmalen Deckelspalt 38 an die Sehne 18 an. Der Deckelspalt ist in Fig. 5 vergrößert dargestellt.

Es soll an dieser Stelle bemerkt werden, daß bei einem gewölbeartigen Gefäßdeckel, wie er in den Figuren 4 und 5 dargestellt ist, die Sehne nur in der Draufsicht eine Gerade ist, sonst aber eine dem Schnitt des Gewölbeprofils folgende Linie und damit auch die Unterkante der vorderen Schachtwand 34 in der gleichen Form ausgebildet ist.

Bei geschlossenem Gefäßdeckel, d. h. bei dem in den Figuren 1, 4 und 5 dargestellten Zustand, wird die Außenkontur des Gefäßdeckels gebildet aus dem unteren Rand der hinteren Schachtwand 35, aus dem unteren Rand der beiden, sich anschließenden seitlichen Schachtwände 36 und 37, sowie dem hieran angrenzenden ovalen Teil 19 des ersten Deckelabschnittes 7. An diese Kontur ist der obere Gefäßrand 39, d. h. der obere Rand des Gefäßoberteils 6, angepaßt. Die Kontur des oberen Gefäßrandes 39 entspricht somit bei diesem Ausführungsbeispiel einem durch eine Gerade bzw. einen flachen Bogen 40 begrenzten Oval mit abgerundeten Ecken 41.

Der Übergang von dem durch die Gerade 40 und die angrenzenden Abschnitte des Ovals bestimmten Sektor des Gefäßrandes zum betreffenden Sektor des runden Querschnitts des Gefäßunterteils erfolgt durch einen konvergierenden Wandsektor 42 des Gefäßoberteils 6 (siehe Fig. 3).

Wie bereits erwähnt und in Fig. 5 dargestellt, ist der erste Deckelabschnitt 7 vom zweiten Deckelabschnitt 8 durch einen Spalt 38 getrennt, der parallel zur Sehne 18 verläuft damit das Ofengefäß in der durch die Ofenwiege bestimmten Richtung, in der von der Gefäßmitte 11 aus gesehen ein Abstichloch 43 und eine Arbeitsöffnung 44 angeordnet sind, gekippt werden kann, ohne daß hierdurch eine Behinderung durch die angrenzende vordere Wand 34 des Schachtes 9 auftritt. Da der zweite Deckelabschnitt 8 und damit der Schacht 9 in einer durch das Gerüst 26 getragenen Haltevorrichtung befestigt ist, also nicht auf der Ofenwiege, kann dieser Deckelteil nicht mitkippen. Es genügt aber ein geringfügiges Abheben des unteren Schachtrandes vom oberen Gefäßrand 39, um kleine Kippbewegungen des Ofengefäßes mit aufliegendem ersten Deckelabschnitt und eingefahrenen Elektroden zuzulassen.

Um zu verhindern, daß durch den Spalt 38 zwischen den beiden Deckelabschnitten Ofengase entweichen, sind gemäß einer Weiterbildung der Erfindung an wenigstens einem der aneinandergrenzenden Ränder 45 bzw. 46 des ersten bzw. des zweiten Deckelabschnittes Mittel zum Abdichten des Deckelspaltes 38 vorgesehen. Derartige Mittel werden im folgenden beschrieben.

Eines dieser Mittel besteht darin, daß in den Spalt 38 ein Dichtgas 47 eingeblasen wird. Zu diesem Zweck ist längs des Randes 46, d. h. an der vorderen Schachtwand 34 ein Kanal 48 mit einer, dem Deckelspalt 38 zugewandten spaltförmigen Düsenöffnung, bzw. einer Lochreihe vorgesehen. Der Kanal wird bei dem Ausführungsbeispiel durch eine Hohlprofilstange 49 gebildet, die an der vorderen Schachtwand 34 befestigt ist. Die Düsenöffnung befindet sich an der Unterseite der Hohlprofilstange und ist mit 50 bezeichnet.

Ein weiteres Mittel, das zusätzlich angewandt werden kann, besteht darin, daß an dem Rand 45 des ersten Deckelabschnittes eine durch Kühlrohre gebildete Leiste 51 vorgesehen ist, die bei geschlossenem Deckel mit Spiel in eine Nut 52 eingreift. Im vorliegenden Fall ist die Nut 52 durch die Unterseite der Hohlprofilstange 49 in Verbindung mit einer, an der Hohlprofilstange angeordneten, abgewinkelten Dichtleiste 53 gebildet.

Vorzugsweise ist der Schacht 9 mit Rückhalteorganen 54 (Fingern) für das Chargiergut ausgestattet. Die in der WO 95/04910 beschriebenen Rückhalteorgane sind hierfür in besonderer Weise geeignet. Je nach Kontur des oberen Gefäßrandes 39, 40, 41 sowie der Ausbildung des konvergierenden Wandsektors 42 bedürfen diese Rückhalteorgane 54 jedoch einer speziellen Ausbildung und Anordnung.

Bei dem ersten Ausführungsbeispiel mit einem Übergang von einem Rechteckquerschnitt des Schachtes über ein Oval in das Rund des Gefäßunterteils sind durch den konvergierenden Wandsektor 42 des Gefäßoberteils weitere Anforderungen hinsichtlich der Führung des Chargiergutes beim Schwenken der Finger in die Freigabestellung gegeben. Der Drehwinkel der äußeren Finger ist begrenzt.

In Anpassung an die Form des Wandsektors 42 des Gefäßoberteils 6 sind neben den schwenkbaren Fingern 54 als Abweiser dienende, feststehende Finger 55 vorgesehen.

Die schwenkbaren Finger 54 sind parallel und im Abstand zueinander angeordnet (vergl. Fig. 3) und in Drehlagern 56 gelagert, die in der Rahmenkonstruktion 20 an der hinteren Schachtwand 35 angeordnet sind. Die schwenkbaren Finger 54 sind aus der in Fig. 5 mit ausgezogener Linie dargestellten Schließstellung, in der die inneren Abschnitte der Finger in den Innenraum des Schachtes ragen und den Durchtritt von Chargiergut versperren, in eine, in Fig. 5 strichpunktiert dargestellte Freigabestellung nach unten schwenkbar, in der die inneren Abschnitte der Finger nach unten weisen und den Durchtritt für das Chargiergut durch den Schacht freigeben. Die schwenkbaren Finger 54 sind auch in der Schließstellung mit einem Winkel von etwa 20 ° gegenüber der Horizontalen schräg nach unten geneigt.

Die als feststehende Finger ausgebildeten weiteren Finger 55 sind in der Rahmenkonstruktion benachbart den seitlichen Schachtwänden 36 und 37 federnd gelagert und ragen durch die seitlichen Schachtwände 36 und 37 in den Innenraum des Schachtes, wobei sie ebenfalls im Abstand voneinander angeordnet sind. Die Enden 57 der feststehenden Finger liegen zu den beiden äußeren schwenkbaren Fingern 54 benachbart, wenn sich letztere in der Schließstellung (ausgezogene Linie in Fig. 5) befinden. Hierdurch wird im unteren Bereich des Schachtes ein, den gesamten Schachtquerschnitt überspannendes Rückhalteorgan für das Chargiergut gebildet, das den Eintritt der heißen Ofengase in die im Schacht zurückgehaltene Chargiergutsäule und damit deren Aufheizung ermöglicht. Beim gemeinsamen Herabschwenken der schwenkbaren Finger 54 aus der in Fig. 5 mit durchgezogener Linie dargestellten Schließstellung in die mit einer strichpunktierten Linie dargestellte Freigabestellung wird das herabfallende Material sowohl durch die schwenkbaren Finger 54 wie auch durch die feststehenden Finger 55 zur Mitte, d. h. in das runde Gefäßunterteil geleitet, so daß der Wandsektor 42 des Gefäßoberteils vor einer zu großen Beanspruchung geschützt ist.

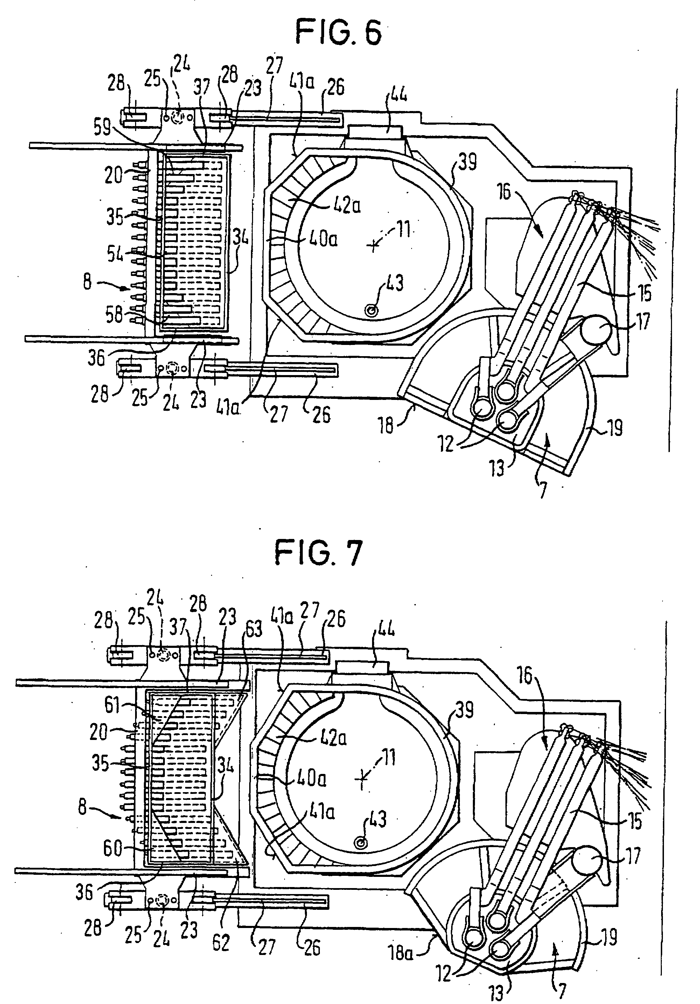

Bei dem in Fig. 6 dargestellten zweiten Ausführungsbeispiel ist der Übergang von einem rechteckigen Querschnitt des Schachtes 9 zu dem runden Querschnitt des Gefäßunterteils 5 über einen Mehreckquerschnitt, der bei diesem Beispiel einer Trapezlinie folgt, gebildet. Außerdem wird der Übergang bereits oberhalb des oberen Randes 39 des Gefäßoberteils eingeleitet, indem im unteren, unterhalb der Rückhalteorgane 54 liegenden Schachtabschnitt die Ecken zwischen den Schachtwänden 35 und 36 sowie 35 und 37 zur Gefäßmitte hin konvergierend ausgebildet sind. Die konvergierenden Schachtwandsektoren sind mit 58 und 59 bezeichnet. Es sind ebene Flächen, die den Rechteckquerschnitt in ein einer Trapezlinie folgendes Querschnittsprofil der Wände 36, 35 und 37 überführen, das sich dann im Profil des oberen Gefäßrandes 39 durch gerade Abschnitt 40a und 41a wiederspiegelt. Von der im Bereich unterhalb des Schachtes 9 einer Trapezlinie folgenden Kontur des oberen Randes 39 des Gefäßoberteils erfolgt der weitere Übergang zum runden Querschnitt des Gefäßunterteils mittels eines konvergierenden Wandsektors 42a.

Bei der Übergangsform nach Fig. 6 kann auf die als Abweiser dienenden festen Finger 55 der ersten Ausführungsform verzichtet werden. Die oberhalb der Schachtwandsektoren 58 und 59 liegenden Finger 54 können jedoch nicht so weit nach unten geschwenkt werden wie die mittleren Finger. In Fig. 6 ist die Freigabestellung der Finger 54 mit ausgezogenen Linien dargestellt, und die Schließstellung gestrichelt. Man sieht, daß bei dem betreffenden Beispiel jeweils drei zu den Schachtwänden 36 und 37 benachbarte Finger, für die die maximale Öffnungsposition dargestellt ist, nicht so weit nach unten geschwenkt werden können wie die mittleren Finger. Dies setzt eine individuelle Ansteuerung der Schwenkbewegung dieser Finger voraus, während die mittleren Finger gemeinsam verschwenkt werden können.

Bei dem zweiten Ausführungsbeispiel wird der Übergang vom Rechteckquerschnitt zum runden Querschnitt bereits im unteren Schachtabschnitt unterhalb der Rückhalteorgane eingeleitet, wobei die den Elektrodenöffnungen benachbarte Wand 34 im Vergleich zum ersten Ausführungsbeispiel nicht verändert wird. Trotzdem erfährt der Durchtrittsquerschnitt des Schachtes im unteren Schachtbereich zumindest keine merkliche Verkleinerung, wenn der Gefäßdeckel gewölbeartig ausgebildet ist und die Unterkante der Schachtwand 34 der Gewölbekontur folgt.

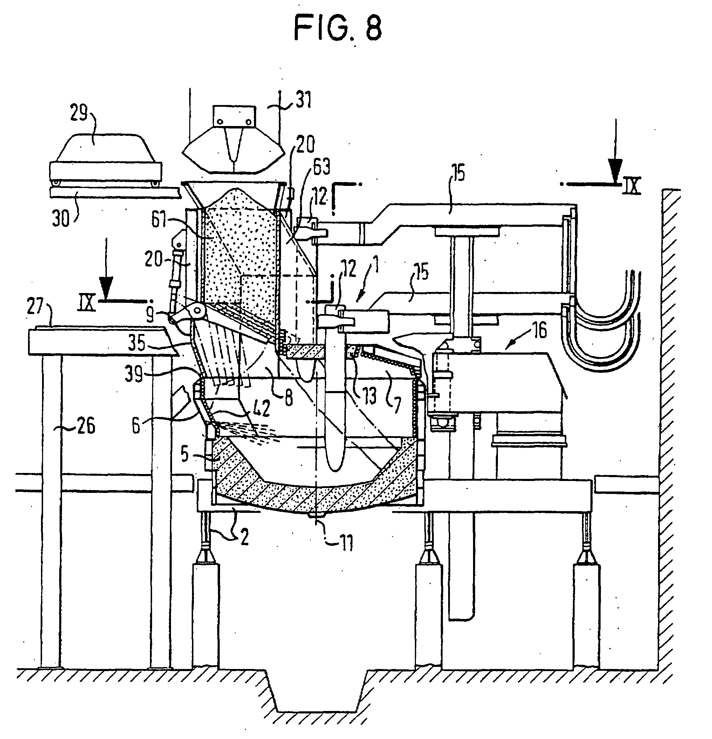

Bei dem in den Fig. 7 bis 9 dargestellten Ausführungsbeispiel erfolgt der Übergang von einem Rechteckquerschnitt zum runden Querschnitt bereits in einem oberen Schachtabschnitt - wie Fig. 8 zeigt, unmittelbar unterhalb der oberen Schachtöffnung - wobei auch hier, wie beim zweiten Ausführungsbeispiel, die von den Elektroden aus gesehene hintere Schachtwand 35 in eine einer Trapezlinie folgende Kontur übergeführt wird. Damit der Schachtquerschnitt von oben nach unten nicht verringert wird - er sollte sich eher vergrößern, um eine unbehinderte Entleerung zu ermöglichen - ist bei dem dritten Ausführungsbeispiel auch die von den Elektrodenöffnungen aus gesehene vordere Schachtwand 34 zur Gefäßmitte konvergierend ausgebildet und zwar parallel zu der hinteren Schachtwand 35. Die konvergierenden Abschnitte der hinteren Schachtwand sind mit 60 und 61, die der vorderen mit 62 und 63 bezeichnet.

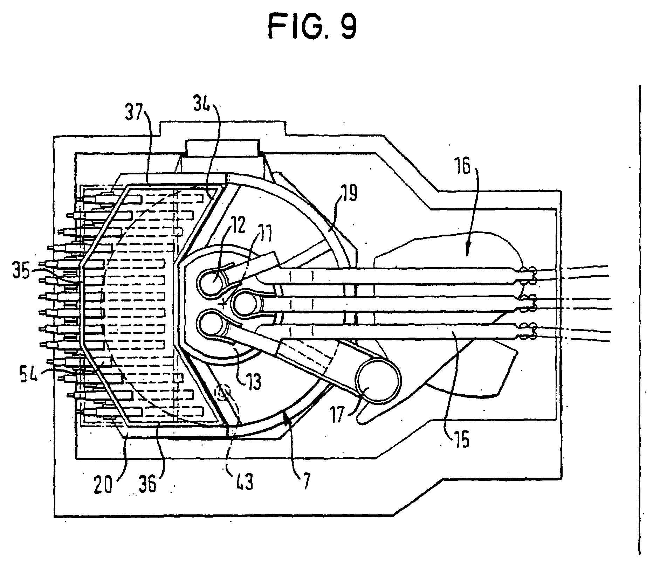

Da bei diesem Ausführungsbeispiel der Übergang bereits oberhalb der Finger 54 eingeleitet wird, sind die Finger in einer Ebene angeordnet, in der die Kontur sowohl der hinteren Schachtwand 35 wie auch der vorderen Schachtwand 34 einer Trapezlinie folgt. In Anpassung an diesen Querschnitt ist auch der an die hintere Schachtwand 35 grenzende waagrechte Balken der Rahmenkonstruktion 20, in dem sich die Drehlager 56 der schwenkbaren Finger 54 befinden, parallel zur Trapezlinienkontur der hinteren Schachtwand 35 angeordnet. Im Vergleich zur zweiten Ausführungsform können sämtliche Finger, wie bei der ersten Ausführungsform, gleich weit geöffnet werden. Die Freigabestellung der Finger 54 ist in den Fig. 7 und 9 mit ausgezogenen Linien, die Schließstellung jeweils mit gestrichelten Linien dargestellt.

Da zur Vermeidung einer Verengung des Durchtrittsquerschnitts auch die vordere Schachtwand nach unten konvergierend ausgebildet ist, so daß in der Draufsicht die Kontur des unteren Randes der Schachtwand 34 einer Trapezlinie folgt, ist der angrenzende Rand (Sehne 18a) des ersten Deckelabschnittes 7 mit gleicher Kontur ausgebildet. Damit ist in der in Fig. 9 dargestellten eingeschwenkten und eingefahrenen Position der beiden Deckelabschnitte 7 und 8 der Spalt zwischen diesen beiden Deckelabschnitten auf seiner gesamten Länge ebenso schmal wie bei den früheren Ausführungsformen.

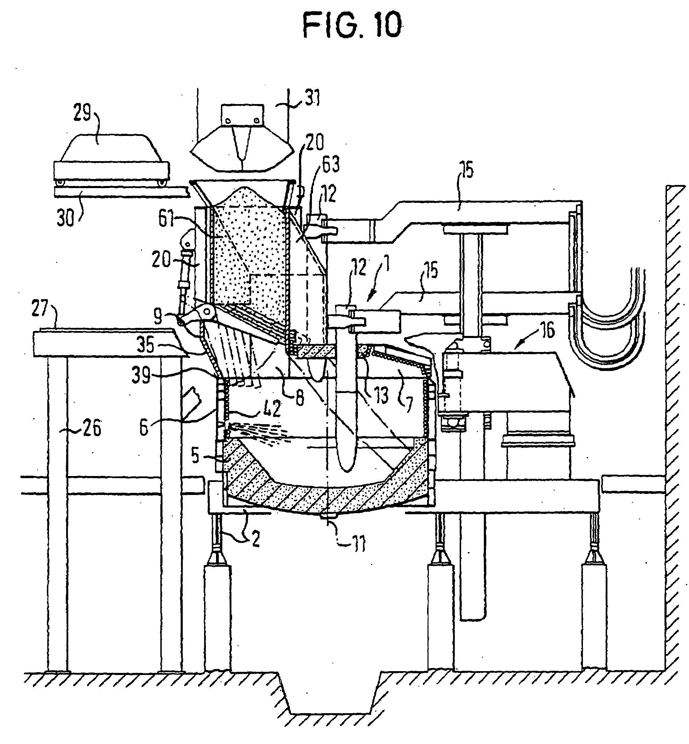

Fig. 10 stellt eine Modifikation des dritten Ausführungsbeispiels dar. Hier ist es bei einem Umbau sogar möglich, das vorhandene runde oder ovale Gefäßoberteil weiter zu verwenden. Bei der in Fig. 10 dargestellten Ausführungsform konvergiert die hintere Schachtwand 35 unterhalb der Finger 54 zum runden Querschnittsprofil des oberen Randes des Gefäßoberteils 6 eines runden oder ovalen Ofengefäßes. Im übrigen entspricht die Ausführungsform nach Fig. 10 dem dritten Ausführungsbeispiel. Begünstigend sind ein gewölbeartiger Deckel, durch den verhindert wird, daß im unteren Bereich der Innenquerschnitt des Schachtes verringert wird sowie die schwenkbaren Finger 54, die das Chargiergut beim Schwenken nach unten zur Gefäßmitte hin leiten und den oberen Gefäßrand vor herabfallendem Einsatzmaterial schützen.

## Patentansprüche

1. Einschmelzaggregat mit einem Lichtbogenofen (1),
der ein Ofengefäß (3) aus einem Gefäßunterteil (5) und einem Gefäßoberteil (6), sowie
einen Gefäßdeckel (4) aus einem ersten und einem zweiten Deckelabschnitt (7 bzw. 8) enthält,
von denen der erste Deckelabschnitt (7) wenigstens eine Elektrodenöffnung (14) enthält,
der zweite Deckelabschnitt (8) einen in einer Haltevorrichtung (21) befestigten Schacht (9), mit einer verschließbaren Beschickungsöffnung und einer Gasdurchtrittsöffnung (32) im oberen Bereich des Schachtes (9) enthält, zum Vorwärmen von in das Ofengefäß zu chargierendem Einsatzmaterial,
die Haltevorrichtung (21) und das Gefäß (3) relativ zueinander horizontal verschiebbar sind,
**dadurch gekennzeichnet, daß** der erste und der zweite Deckelabschnitt (7 bzw. 8) als voneinander durch einen Deckelspalt (38) getrennte Einheiten ausgebildet sind,
daß in einer Vertikalprojektion ein Teil der Innenkontur des Schachtquerschnittes außerhalb der Innenkontur des oberen Randes des Gefäßunterteils liegt, und
das Gefäßoberteil (6) im Bereich unterhalb des Schachtes (9) und/oder die von den Elektrodenöffnungen (14) aus gesehene hintere Schachtwand (35) einen zur Gefäßmitte (11) konvergierenden Wandsektor (42, 42a, 58, 59, 60, 61) aufweist.

2. Einschmelzaggregat nach Anspruch 1,
**dadurch gekennzeichnet, daß** der erste und der zweite Deckelabschnitt (7 bzw. 8) voneinander unabhängig relativ zum Gefäß (3) horizontal verschiebbar sind.

3. Einschmelzaggregat nach Anspruch 1 oder 2, **dadurch gekennzeichnet, daß** der erste Deckelabschnitt (7) durch eine Deckelhub- und -schwenkvorrichtung (17) anhebbar/absenkbar und zur Seite ausschwenkbar ist.

4. Einschmelzaggregat nach Anspruch 3, **dadurch gekennzeichnet, daß** eine Elektrodenhub- und -schwenkvorrichtung (16) gemeinsam mit der Deckelhub- und Schwenkvorrichtung (17) ausschwenkbar ist.

5. Einschmelzaggregat nach einem der Ansprüche 1 bis 4, **dadurch gekennzeichnet, daß** der zweite Deckelabschnitt (8) gemeinsam mit dem Schacht (9) in der Haltevorrichtung (21) anhebbar/absenkbar und die Haltevorrichtung (21) horizontal verschiebbar ist.

6. Einschmelzaggregat nach einem der Ansprüche 1 bis 5, **dadurch gekennzeichnet, daß** die Haltevorrichtung (21) senkrecht zum Deckelspalt (38) verschiebbar ist.

7. Einschmelzaggregat nach einem der Ansprüche 1 bis 6, **dadurch gekennzeichnet, daß** wenigstens an einem der beiden aneinander grenzenden Ränder (45, 46) des ersten und des zweiten Deckelabschnittes (7 bzw. 8) Mittel zum Abdichten des Deckelspaltes (38) vorgesehen sind.

8. Einschmelzaggregat nach Anspruch 7, **dadurch gekennzeichnet, daß** an einem (46) der beiden aneinandergrenzenden Ränder (45, 46) des ersten und des zweiten Deckelabschnittes (7 bzw. 8) eine längs des Randes verlaufende Nut (52) und an dem anderen (45) dieser Ränder (45, 46) eine längs des Randes verlaufende Leiste (51) vorgesehen ist, die bei geschlossenem Deckel mit Spiel in die Nut (52) eingreift.

9. Einschmelzaggregat nach Anspruch 7 oder 8, **dadurch gekennzeichnet, daß** wenigstens an einem (46) der aneinandergrenzenden Ränder (45, 46) des ersten und des zweiten Deckelabschnittes (7 bzw. 8) ein längs des Randes verlaufender Kanal (48) mit wenigstens einer dem Deckelspalt (38) zugewandten Düsenöffnung (50) angeordnet ist, durch die ein Dichtgas in den Deckelspalt (38) einblasbar ist.

10. Einschmelzaggregat nach Anspruch 9, **dadurch gekennzeichnet, daß** eine längs des Randes (46) verlaufende spaltförmige Düsenöffnung (50) vorgesehen ist.

11. Einschmelzaggregat nach Anspruch 9, **dadurch gekennzeichnet, daß** als Düsenöffnung eine längs des Randes (46) verlaufende Lochreihe vorgesehen ist.

12. Einschmelzaggregat nach einem der Ansprüche 2 bis 11,
**dadurch gekennzeichnet, daß** die von den Elektrodenöffnungen (14) aus gesehene hintere Schachtwand (35) einen zum oberen Rand des Gefäßunterteils (5) konvergierenden Wandsektor (58, 59, 60, 61) aufweist.

13. Einschmelzaggregat nach einem der Ansprüche 1 bis 12, **dadurch gekennzeichnet, daß** der erste Deckelabschnitt (7) in der Draufsicht als ein durch eine Sehne (18, 18a) begrenztes Oval ausgebildet ist und die Kontur des unteren Randes der von den Elektrodenöffnungen (14) aus gesehenen vorderen Schachtwand (34) der Kontur der Sehne (18, 18a) angepaßt ist.

14. Einschmelzaggregat nach einem der Ansprüche 1 bis 13, **dadurch gekennzeichnet, daß** das Profil des unteren Randes der von den Elektrodenöffnungen (14) aus gesehenen hinteren Schachtwand (35) und der hieran angrenzenden seitlichen Schachtwände (36, 37) im Bereich des zweiten Deckelabschnittes (8) dem Profil des oberen Gefäßrandes (39) entspricht.

15. Einschmelzaggregat nach einem der Ansprüche 1 bis 14, **dadurch gekennzeichnet, daß** das Querschnittsprofil im oberen Abschnitt des Schachtes (9) rechteckig ist und das Profil der von den Elektrodenöffnungen (14) aus gesehenen hinteren Schachtwand (35) und der sich daran anschließenden seitlichen Schachtwände (36, 37) von oben nach unten über ein Ovalprofil zum Rundprofil des oberen Randes des Gefäßunterteils (5) oder des Gefäßoberteils (6) konvergiert.

16. Einschmelzaggregat nach einem der Ansprüche 1 bis 14, **dadurch gekennzeichnet, daß** das Querschnittsprofil im oberen Abschnitt des Schachtes (9) rechteckig ist und das Profil der von den Elektrodenöffnungen (14) aus gesehenen hinteren Schachtwand (35) und der sich daran anschließenden seitlichen Schachtwände (36, 37) von oben nach unten über ein Mehreckprofil zum Rundprofil des oberen Randes des Gefäßunterteils (5) oder des Gefäßoberteils (6) konvergiert.

17. Einschmelzaggregat nach Anspruch 16, **dadurch gekennzeichnet, daß** das Mehreckprofil ein einer Trapezlinie folgendes Profil ist.

18. Einschmelzaggregat nach einem der Ansprüche 1 bis 17, **dadurch gekennzeichnet, daß** die von den Elektrodenöffnungen (14) aus gesehene vordere Schachtwand (34) parallel zur hinteren Schachtwand (35) verlaufend konvergiert.

19. Einschmelzaggregat nach einem der Ansprüche 1 bis 18, **dadurch gekennzeichnet, daß** der Schacht (9) in seinem unteren Bereich Rückhalteorgane (54, 55) für das zu erhitzende Einsatzmaterial aufweist, die aus einer Schließstellung, in der der Durchtritt für Gas möglich, für Chargiergut aber versperrt ist, in eine Freigabestellung bewegbar sind, in der sie auch den Durchtritt des Einsatzmaterials durch den Schacht (9) freigeben.

20. Einschmelzaggregat nach Anspruch 19, **dadurch gekennzeichnet, daß** die Rückhalteorgane (54, 55) parallel und im Abstand zueinander angeordnete Finger (54) enthalten, die in Drehlagern (56) gelagert und aus einer Schließstellung, in der innere Abschnitte der Finger (54) zum Versperren des Durchtrittes von Chargiergut in den Innenraum des Schachtes ragen, in eine Freigabestellung nach unten schwenkbar sind, in der diese Abschnitte der Finger (54) nach unten weisen und den Durchtritt für das Chargiergut durch den Schacht (9) freigeben.

21. Einschmelzaggregat nach Anspruch 20, **dadurch gekennzeichnet, daß** die Drehlager (56) für die schwenkbaren Finger in der Rahmenkonstruktion (20) an der hinteren Schachtwand (35) angeordnet sind und von den angrenzenden seitlichen Schachtwänden (36, 37) feststehende Finger (55) in den Innenraum des Schachtes (9) ragen, deren Enden (57) zu den beiden äußeren schwenkbaren Fingern (54) benachbart liegen, wenn sich letztere in der Schließstellung befinden.

22. Einschmelzaggregat nach Anspruch 21, **dadurch gekennzeichnet, daß** die inneren Abschnitte der schwenkbaren Finger (54) in der Schließstellung schräg nach unten geneigt sind und die inneren Enden (57) der diesen schwenkbaren Fingern (54) zugewandten feststehenden Finger etwa die gleiche Neigung aufweisen wie die beiden äußeren schwenkbaren Finger (54) in ihrer Schließstellung.

23. Einschmelzaggregat nach Anspruch 20, **dadurch gekennzeichnet, daß** mittels individueller Steuerung der Schwenkbewegung der zu den seitlichen Schachtwänden (36, 37) benachbarten, äußeren Finger (54) diese nicht so weit nach unten verschwenkbar sind, wie die'dazwischenliegenden mittleren Finger (54), die gemeinsam verschwenkbar sind.

24. Einschmelzaggregat nach Anspruch 20, **dadurch gekennzeichnet, daß** bei einem Schacht, bei dem die von den Elektrodenöffnungen (14) ausgesehene hintere Schachtwand (35) und die sich daran anschließenden seitlichen Schachtwände (36, 37) von oben nach unten über ein einer Trapezlinie folgendes Mehreckprofil zu einem Rundprofil konvergieren, der an die hintere Schachtwand (35) grenzende waagrechte Balken der Rahmenkonstruktion (20) mit den Drehlagern (56) für die schwenkbaren Finger (54) parallel zur Trapezlinienkontur der hinteren Schachtwand (35) verläuft.

## Claims

1. A smelting unit having an arc furnace (1)
which includes a furnace vessel (3) comprising a lower vessel portion (5) and an upper vessel portion (6) and
a vessel cover (4) comprising first and second cover portions (7 and 8) of which the first cover portion (7) includes at least one electrode opening (14),
the second cover portion (8) includes a shaft (9) fixed in a holding arrangement (21), with a closable charging opening and a gas passage opening (32) in the upper region of the shaft (9), for preheating feed material which is to be charged into the furnace vessel, and
the holding arrangement (21) and the vessel (3) are displaceable horizontally relative to each other,
**characterised in that** the first and second cover portions (7 and 8) are in the form of units which are separated from each other by a cover gap (38),
that in a vertical projection a part of the internal contour of the shaft cross-section is outside the internal contour of the upper edge of the lower vessel portion and
that the upper vessel portion (6) in the region beneath the shaft (9) and/or the rear shaft wall (35) as viewed from the electrode openings (14) has a wall sector (42, 42a, 58, 59, 60, 61) converging towards the vessel centre (11).

2. A smelting unit according to claim 1 **characterised in that** the first and second cover portions (7 and 8) are displaceable horizontally relative to the vessel (3) independently of each other.

3. A smelting unit according to claim 1 or claim 2 **characterised in that** the first cover portion (7) can be raised/lowered and pivoted out to the side by a cover lifting and pivoting arrangement (17).

4. A smelting unit according to claim 3 **characterised in that** an electrode lifting and pivoting arrangement (16) can be pivoted out jointly with the cover lifting and pivoting arrangement (17).

5. A smelting unit according to one of claims 1 to 4 **characterised in that** the second cover portion (8) can be raised/lowered jointly with the shaft (9) in the holding arrangement (21) and the holding arrangement (21) is horizontally displaceable.

6. A smelting unit according to one of claims 1 to 5 **characterised in that** the holding arrangement (21) is displaceable perpendicularly to the cover gap (38).

7. A smelting unit according to one of claims 1 to 6 **characterised in that** means for sealing off the cover gap (38) are provided at least at one of the two mutually adjoining edges (45, 46) of the first and second cover portions (7 and 8).

8. A smelting unit according to claim 7 **characterised in that** provided at one (46) of the two mutually adjoining edges (45, 46) of the first and second cover portions (7 and 8) is a groove (52) which extends along the edge and provided at the other (45) of said edges (45, 46) is a strip portion (51) which extends along the edge and which engages with clearance into the groove (52) when the cover is closed.

9. A smelting unit according to claim 7 or claim 8 **characterised in that** arranged at least at one (46) of the mutually adjoining edges (45, 46) of the first and second cover portions (7 and 8) is a duct (48) which extends along the edge, with at least one nozzle opening (50) which faces towards the cover gap (38) and through which a sealing gas can be blown into the cover gap (38).

10. A smelting unit according to claim 9 **characterised in that** there is provided a slit-shaped nozzle opening (50) which extends along the edge (46).

11. A smelting unit according to claim 9 characterised that there is provided a row of holes extending along the edge (46) as the nozzle opening.

12. A smelting unit according to one of claims 2 to 11 **characterised in that** the shaft wall (35) which is the rear shaft wall as viewed from the electrode openings (14) has a wall sector (58, 59, 60, 61) which converges towards the upper edge of the lower vessel portion (5).

13. A smelting unit according to one of claims 1 to 12 **characterised in that** the first cover portion (7) is, in plan view, in the form of an oval delimited by a chord (18, 18a) and the contour of the lower edge of the shaft wall (34) which is the front shaft wall as viewed from the electrode openings (14) is adapted to the contour of the chord (18,18a).

14. A smelting unit according to one of claims 1 to 13 **characterised in that** the profile of the lower edge of the shaft wall (35) which is the rear shaft wall as viewed from the electrode openings (14) and the adjoining lateral side walls (36, 37) corresponds in the region of the second cover portion (8) to the profile of the upper edge (39) of the vessel.

15. A smelting unit according to one of claims 1 to 14 **characterised in that** the cross-sectional profile is rectangular in the upper portion of the shaft (9) and the profile of the shaft wall (35) which is the rear shaft wall as viewed from the electrode openings (14) and the adjoining lateral shaft walls (36, 37) converge downwardly by way of an oval profile to the round profile of the upper edge of the lower vessel portion (5) or the upper vessel portion (6).

16. A smelting unit according to one of claims 1 to 14 **characterised in that** the cross-sectional profile is rectangular in the upper portion of the shaft (9) and the profile of the shaft wall (35) which is the rear shaft wall as viewed from the electrode openings (14) and the adjoining lateral shaft walls (36, 37) converge downwardly by way of a polygonal profile to the round profile of the upper edge of the lower vessel portion (5) or the upper vessel portion (6).

17. A smelting unit according to claim 16 **characterised in that** the polygonal profile is a profile following a trapezoidal line.

18. A smelting unit according to one of claims 1 to 17 **characterised in that** the shaft wall (34) which is the front shaft wall as viewed from the electrode openings (14) converges extending in parallel relationship to the rear shaft wall (35).

19. A smelting unit according to one of claims 1 to 18 **characterised in that** in its lower region the shaft (9) has retaining members (54, 55) for the feed material to be heated, which retaining members are movable from a closed position in which the passage therethrough for gas is possible but is blocked for charging material, into a release position in which the retaining members also release the passage of the feed material through the shaft (9).

20. A smelting unit according to claim 19 **characterised in that** the retaining members (54, 55) include fingers (54) which are arranged parallel and at a spacing relative to each other and which are mounted in rotary mountings (56) and which are pivotable downwardly from a closed position in which inner portions of the fingers (54) project into the interior of the shaft to block the passage of charging material therethrough, into a release position in which said portions of the fingers (54) point downwardly and release the charging material to pass through the shaft (9).

21. A smelting unit according to claim 20 **characterised in that** the rotary mountings (56) for the pivotable fingers are arranged in the frame structure (20) at the rear shaft wall (35)and fixed fingers (55) project into the interior of the shaft (9) from the adjoining lateral shaft walls (36, 37), the ends (57) of which fixed fingers are disposed adjacent to the two outer pivotable fingers (54) when the latter are in the closed position.

22. A smelting unit according to claim 21 **characterised in that** the inner portions of the pivotable fingers (54) are inclined obliquely downwardly in the closed position and the inner ends (57) of the fixed fingers which are towards said pivotable fingers (54) are at approximately the same inclination as the two outer pivotable fingers (54) in the closed position.

23. A smelting unit according to claim 20 **characterised in that** by means of individual control of the pivotal movement of the outer fingers (54) which are adjacent to the lateral shaft walls, those fingers are not pivotable downwardly as far as the central fingers (54) which are disposed therebetween and which are jointly pivotable.

24. A smelting unit according to claim 20 **characterised in that**, in a shaft in which the rear shaft wall (35) as viewed from the electrode openings (14) and the lateral shaft walls (36, 37) adjoining same converge downwardly by way of a polygonal profile following a trapezoidal line to a round profile and the horizontal beam member, adjoining the rear shaft wall (35), of the frame structure (20) with the rotary mountings (56) for the pivotable fingers (54) extends parallel to the trapezoidal line contour of the rear shaft wall (35).

## Revendications

1. Groupe de fusion comprenant un four (1) à arc électrique, qui comprend :
- une carcasse (3) de four constituée d'une partie (5) inférieure de carcasse et d'une partie (6) supérieure de carcasse ainsi que,
- un couvercle (4) de carcasse constitué d'une première partie et d'une deuxième partie (7 et 8) de couvercle,
la première partie (7) de couvercle comprenant au moins une ouverture (14) pour une électrode,
la deuxième partie (8) de couvercle comportant un puits (9) qui est fixé par un dispositif (21) de maintien et qui a une ouverture de chargement qui peut être fermée et une ouverture (32) de passage des gaz dans la partie supérieure du puits (9) lequel est destiné à préchauffer de la matière de charge à charger dans la carcasse du four,
le dispositif (21) de maintien et la carcasse (3) pouvant coulisser horizontalement l'un par rapport à l'autre,
**caractérisé en ce que** la première et la deuxième partie (7 et 8) de couvercle sont constituées sous la forme d'unités séparées l'une de l'autre par une fente (38) de couvercle,
**en ce que**, suivant une projection verticale, une partie du contour intérieur de la section transversale du puits est à l'extérieur du contour intérieur du bord supérieur de la partie inférieure de la carcasse et,
**en ce que** la partie (6) supérieure de la carcasse dans la zone en dessous du puits (9)/ou la paroi (35) du puits inférieure, telle que vue à partir des ouvertures (14) pour les électrodes, comporte un secteur (42, 42a, 58, 59, 60, 61) de paroi convergeant vers le milieu (11) de la carcasse.

2. Groupe de fusion suivant la revendication 1, **caractérisé en ce que** la première et la deuxième partie (7 et 8) de couvercle peuvent coulisser horizontalement, par rapport à la carcasse (3) indépendamment l'une de l'autre.

3. Groupe de fusion suivant la revendication 1 ou 2, **caractérisé en ce que** la première partie (7) de couvercle peut être soulevée/abaissée par un dispositif (17) de soulèvement et d'abaissement du couvercle, et être basculée sur le côté.

4. Groupe de fusion suivant la revendication 3, **caractérisé en ce qu'**un dispositif (16) de soulèvement et d'abaissement des électrodes peut être basculé conjointement avec le dispositif (17) de soulèvement et d'abaissement du couvercle.

5. Groupe de fusion suivant les revendications 1 à 4, **caractérisé en ce que** la deuxième partie (8) du couvercle peut être soulevée/abaissée conjointement avec le puits du dispositif (21) de maintien, et le dispositif (21) de maintien peut coulisser horizontalement.

6. Groupe de fusion suivant l'une des revendications 1 à 5, **caractérisé en ce que** le dispositif (21) de maintien peut coulisser perpendiculairement à la fente (38) du couvercle.

7. Groupe de fusion suivant l'une des revendications 1 à 6, **caractérisé en ce qu'**au moins sur l'un des deux bords (45, 46) adjacents l'un à l'autre de la première et de la deuxième partie (7 et 8) du couvercle, il est prévu des moyens pour rendre étanche la fente (38) du couvercle.

8. Groupe de fusion suivant la revendication 7, **caractérisé en ce que** sur l'un (46) des deux bords (45, 46) adjacents de la première et de la deuxième partie (7 et 8) de couvercle, il est prévu une gorge (52) s'étendant le long du bord et sur l'autre (45) de ces bords (45, 46), il est prévu une nervure (51) s'étendant le long du bord et pénétrant, lorsque le couvercle est fermé, avec jeu dans la gorge (52).

9. Groupe de fusion suivant la revendication 7 ou 8, **caractérisé en ce qu'**au moins sur l'un (46) des bords (45, 46) adjacents de la première et de la deuxième partie (7 et 8) de couvercle, il est prévu un canal (48) descendant le long du bord et ayant au moins une ouverture (50) de buse, qui est tournée vers la fente (38) du couvercle et par laquelle un gaz d'étanchéité peut être insufflé dans la fente (38) du couvercle.

10. Groupe de fusion suivant la revendication 9, **caractérisé en ce qu'**il est prévu une ouverture (50) de buse en forme de fente, s'étendant le long du bord (46).

11. Groupe de fusion suivant la revendication 9, **caractérisé en ce qu'**il est prévu comme ouverture de buse une rangée de trous s'étendant le long du bord (46).

12. Groupe de fusion suivant l'une des revendications 2 à 11, **caractérisé en ce que** la paroi (35) du puits arrière, tel que vu à partir des ouvertures (14) pour des électrodes, a un secteur (58, 59, 60, 61) de paroi convergeant vers le bord supérieur de la partie (5) inférieure de la carcasse.

13. Groupe de fusion suivant l'une des revendications 1 à 12, **caractérisé en ce que** la première partie (7) de couvercle est constituée dans la vue en plan sous la forme d'un ovale délimité par une corde (18, 18a) et le contour du bord inférieur de la paroi (34) du puits avant, tel que vu à partir des ouvertures (14) pour les électrodes, est adapté au contour de la corde (18, 18a).

14. Groupe de fusion suivant l'une des revendications 1 à 13, **caractérisé en ce que** le profil du bord inférieur de la paroi (35) du puits arrière, tel que vu à partir des ouvertures (14) pour les électrodes, et des parois (36, 37) de puits latérales qui lui sont adjacentes, correspond dans la zone de la deuxième partie (8) de couvercle au profil du bord (39) supérieur de la carcasse.

15. Groupe de fusion suivant l'une des revendications 1 à 14, **caractérisé en ce que** le profil en section droite dans la partie supérieure du puits (9) est rectangulaire, et le profil de la paroi (35) du puits arrière, tel que vu à partir des ouvertures (14) pour les électrodes, et des parois (36, 37) latérales du puits qui s'y raccordent, convergent de haut en bas, par l'intermédiaire d'un profil ovale, vers le profil circulaire du bord supérieur de la partie (5) inférieure de la carcasse ou de la partie (6) supérieure de la carcasse.

16. Groupe de fusion suivant l'une des revendications 1 à 14, **caractérisé en ce que** le profil en section transversale de la partie supérieure du puits (9) est rectangulaire, et le profil de la paroi (35) du puits arrière, tel que vu à partir des ouvertures (14) des électrodes, et des parois (36,37) latérales de puits qui s'y raccordent, convergent, de haut en bas, par l'intermédiaire d'un profil polygonal, vers le profil circulaire du bord supérieur de la partie (5) inférieure de la carcasse ou de la partie (6) supérieure de la carcasse.

17. Groupe de fusion suivant la revendication 16, **caractérisé en ce que** le profil polygonal est un profil suivant une ligne trapézoïdale.

18. Groupe de fusion suivant l'une des revendications 1 à 17, **caractérisé en ce que** la paroi (34) du puits en avant, tel que vu à partir des ouvertures (14) pour les électrodes, converge en s'étendant parallèlement à la paroi (35) arrière du puits.

19. Groupe de fusion suivant l'une des revendications 1 à 18, **caractérisé en ce que** le puits (9) comporte, dans sa partie inférieure, des organes (54, 55) de retenue de la matière de charge à chauffer, qui peuvent être déplacés d'une position de fermeture dans laquelle le passage pour du gaz est possible, mais est obturé pour du produit de charge, à une position de dégagement dans laquelle, ils dégagent également le passage pour que de la matière de charge puisse passer dans le puits (9).

20. Groupe de fusion suivant la revendication 19, **caractérisé en ce que** les organes (54, 55) de retenue comportent des doigts (54) parallèles entre eux et à distance les uns des autres, qui sont montés dans des paliers (56) tournants, et qui peuvent à partir d'une position de fermeture dans laquelle des parties intérieures des doigts (54) font saillie pour empêcher le passage du produit de charge à l'intérieur du puits, basculer vers le bas en une position de dégagement, dans laquelle ces parties des doigts (54) sont tournées vers le bas et permettent le passage du produit de charge dans le puits (9).

21. Groupe de fusion suivant la revendication 20, **caractérisé en ce que** les paliers (56) toumants pour les doigts basculants sont montés dans la construction (20) en forme de cadre sur la paroi (35) arrière du puits, et des doigts (55) fixés par les parois (36, 37) latérales du puits adjacentes font saillie à l'intérieur du puits (9), doigts dont les extrémités sont voisines des deux doigts (54) extérieurs basculants quand ces derniers se trouvent en la position de fermeture.

22. Groupe de fusion suivant la revendication 21, **caractérisé en ce que** les parties intérieures des doigts (54) basculants, sont inclinées vers le bas en la position de fermeture et les extrémités (57) inférieures des doigts fixes tournés vers ces doigts (54) basculants, ont à peu près la même inclinaison que les deux doigts (54) extérieurs basculants en leur position de fermeture.

23. Groupe de fusion suivant la revendication 20, **caractérisé en ce qu'**au moyen d'une commande individuelle du mouvement de basculement des doigts (54) extérieurs voisins des parois (36, 37) latérales du puits, ces doigts ne peuvent pas basculer aussi loin vers le bas que les doigts (54) médians intermédiaires qui peuvent basculer conjointement.

24. Groupe de fusion suivant la revendication 20, **caractérisé en ce que**, pour un puits dans lequel la paroi (35) du puits arrière, tel que vu à partir des ouvertures (14) des électrodes, et les parois (36, 37) latérales de puits s'y raccordant, convergent de haut en bas par l'intermédiaire d'un profil polygonal suivant une ligne trapézoïdale, vers un profil circulaire qui s'étend parallèlement au contour trapézoïdale de la paroi (35) arrière du puits, la poutrelle, horizontale et délimitant la paroi (35) arrière du puits, de la construction (20) sous forme de cadre s'étend, avec les palier (56) tournants pour les doigts (54) basculants, parallèlement au contour trapézoidal de la paroi (35) arrière du puits.
